(19) Europäisches Patentamt / European Patent Office / Office européen des brevets

(11) **EP 3 045 224 B1**

(12) **EUROPEAN PATENT SPECIFICATION**

(45) Date of publication and mention
of the grant of the patent:
**04.04.2018 Bulletin 2018/14**

(21) Application number: **14844146.2**

(22) Date of filing: **03.09.2014**

(51) Int Cl.:
*B01J 20/22* [(2006.01)]     *B01J 20/10* [(2006.01)]
*B01J 20/30* [(2006.01)]     *B01J 20/32* [(2006.01)]
*B01J 20/28* [(2006.01)]     *A61L 9/01* [(2006.01)]
*A61L 9/16* [(2006.01)]     *B01D 53/02* [(2006.01)]
*B01D 53/72* [(2006.01)]

(86) International application number:
**PCT/JP2014/073125**

(87) International publication number:
**WO 2015/037483 (19.03.2015 Gazette 2015/11)**

(54) **GAS ADSORBENT, GAS ADSORBING SHEET, AND AIR FILTER**

GASADSORPTIONSMITTEL, GASADSORPTIONSFOLIE UND LUFTFILTER

ADSORBANT DE GAZ, FEUILLE D'ADSORPTION DE GAZ ET FILTRE À AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2013 JP 2013189981**

(43) Date of publication of application:
**20.07.2016 Bulletin 2016/29**

(73) Proprietor: **Toray Industries, Inc.
Tokyo 103-8666 (JP)**

(72) Inventors:
• **MIYOSHI, Kengo
Otsu-shi
Shiga 520-8558 (JP)**

• **HIGASHI, Yuki
Otsu-shi
Shiga 520-8558 (JP)**

(74) Representative: **Hoefer & Partner Patentanwälte
mbB
Pilgersheimer Straße 20
81543 München (DE)**

(56) References cited:
JP-A- 2002 336 693     JP-A- 2004 049 297
JP-A- 2008 075 038     JP-A- 2008 138 300
JP-A- 2010 058 075     JP-A- 2010 253 409
JP-A- 2012 120 946     US-A- 5 206 204

**Description**

Technical Field

The present invention relates to a gas adsorbent and a gas adsorbing sheet that can remove aldehydes with high efficiency, and an air filter comprising the gas adsorbing sheet.

Background Art

There are a wide range of air-borne contaminants, of which aldehydes such as acetaldehyde, in particular, are attracting attention as sources of major contamination problems. Acetaldehyde is a typical offensive odor component contained in cigarette smoke and exhaust gas from automobiles and we can feel the odor even if its concentration is low.
Activated carbon, which has a large surface area and pore volume, have conventionally been in wide use for removal of malodorous components in the air, but the equilibrium adsorption rate of acetaldehyde on activated carbon is significantly smaller as compared to other malodorous substances, resulting in poor practical performance.
Accordingly, impregnation of activated carbon with an amine compound has been proposed as a means for improving the acetaldehyde adsorption/removal performance of activated carbon (see patent document 1). In the case of this proposal, however, the performance of the method is still insufficient when applied to air filters or the like that are used under dynamic conditions where air is flowing.
Another study has proposed an aldehyde gas adsorbent consisting mainly of a cysteine supported on porous silica that serves for adsorption/removal of acetaldehyde under dynamic conditions where air is flowing (see patent document 2). This proposed aldehyde gas adsorbent, however, also have some problems including insufficient performance under dynamic conditions, similarly to activated carbon, and liability to aged degradation.
Still another study has proposed an aldehyde gas adsorbent consisting mainly of a primary amino-containing compound supported on porous silica that serves for adsorption/removal of acetaldehyde under dynamic conditions where air is flowing (see patent document 3).
Patent document 4 teaches a material and a sheet for removing an aldehyde selectively and efficiently without using activated carbon or impregnated activated carbon. The material for removing an aldehyde employs silica gel having micropores of diameters of 12 to 100 nm as a support with at least one species of hydrazide compounds supported thereon.

Prior Art Documents

Patent Documents

   Patent document 1: Japanese Unexamined Patent Publication (Kokai) No. HEI 5-317703

   Patent document 2: Japanese Unexamined Patent Publication (Kokai) No. 2012-120946

   Patent document 3: Japanese Unexamined Patent Publication (Kokai) No. 2002-200149

   Patent document 4: JP 2010 058075 A

Summary of the Invention

Problems to be Solved by the Invention

Though showing high performance under dynamic conditions, however, the aldehyde gas adsorbent proposed in patent document 3 has the problem of gradual performance deterioration being suffered as it is stored for a long period of time.
Thus, there has been a call for an aldehyde gas adsorbent that is high in acetaldehyde removal performance under dynamic conditions, free of aged degradation during storage, and accordingly suitable for producing air filters.
Under such circumstances, an object of the present invention is to provide a gas adsorbent that can remove aldehydes with high efficiently while depressing aged degradation in aldehyde removal performance during storage.

Means of Solving the Problems

As a result of intensive studies aiming to solve these problems, the present inventors have arrived at the invention described below.

The gas adsorbent according to the present invention is a gas adsorbent including inorganic porous bodies and at least a water-soluble acid hydrazide compound and a compound having a thiol-based functional group, with the latter compounds being supported on the former body.

In a preferred embodiment of the gas adsorbent according to the present invention, the compound having a thiol-based functional group has an amino-based functional group.

In a preferred embodiment of the gas adsorbent according to the present invention, the compound having a thiol-based functional group is a cysteine.

In a preferred embodiment of the gas adsorbent according to the present invention, the gas adsorbent according to the present invention is a gas adsorbent such that a liquid prepared by dispersing 5 g thereof in 100 g of water has a pH (hydrogen ion exponent) of 3.0 to 7.5.

In a preferred embodiment of the gas adsorbent according to the present invention, the inorganic porous bodies supports at least one additional acid selected from organic acids and inorganic acids.

In a preferred embodiment of the gas adsorbent according to the present invention, the inorganic porous bodies are porous silica.

The gas adsorption sheet according to the present invention includes the gas adsorbent sandwiched between two air permeable sheet-like components, the gas adsorbent being fixed to the sheet-like components with thermoplastic resin.

According to the present invention, an air filter can be produced by using the gas adsorption sheet.

The production method for the gas adsorbent according to the present invention includes a step for dissolving the cysteine and the water-soluble acid hydrazide compound in water, a step for impregnating inorganic porous bodies therewith, and a step for the drying thereof.

Advantageous Effect of the Invention

The present invention can provide a gas adsorbent that can maintain high aldehyde removal performance for a long period of time because it is high in the rate of reaction with aldehydes and the capacity for adsorption thereof to enable high aldehyde removal performance in a dynamic environment and depression of aged degradation during storage.

Gas adsorption sheets and air filters that includes the aldehyde gas adsorbent according to the present invention also can maintain high aldehyde removal performance for a long period of time because it is high in the rate of reaction with aldehydes and the capacity for adsorption thereof to enable high aldehyde removal performance in a dynamic environment and depression of aged degradation during storage.

Description of Preferred Embodiments

For the gas adsorbent according to the present invention, it is important to include inorganic porous bodies and at least a water-soluble acid hydrazide compound and a compound having a thiol-based functional group, with the latter compounds being supported on the former body.

First, the present invention uses inorganic porous bodies that can ensure a large surface area for contact with the air under treatment and support an adequate quantity of the undermentioned chemical, thereby achieving an increased aldehyde removal efficiently under dynamic conditions.

Useful materials for the inorganic porous bodies adopted in the present invention include zeolite, active alumina, porous silica, activated clay, aluminum silicate, and magnesium silicate, of which an appropriate one may be selected to suit a particular purpose. In particular, porous silica is preferred because it contains silanol groups over its pore surface and has high affinity with water-soluble acid hydrazide compounds.

The inorganic porous bodies preferably have particle diameters in the particle diameter distribution range of 50 $\mu$m or more and 800 $\mu$m or less. If the particle diameters of the inorganic porous bodies are too small, they will scatter easily and tend to be low in handleability and processability although the adsorption rate will increase. Thus, the particle diameter distribution is preferably 50 $\mu$m or more, more preferably 100 $\mu$m or more. If their particle diameters are too large, on the other hand, they will be difficult to produce and low in strength, leading to high liability to destruction and significant generation of dust. Accordingly, the particle diameter distribution is preferably 800 $\mu$m or less, more preferably 500 $\mu$m or less, from the viewpoint of depressing the dust generation.

The inorganic porous bodies adopted for the present invention preferably have a pore size of 0.5 nm or more and 100 nm or less, more preferably 50 nm or less as upper limit. A pore size of 100 nm or less allows the inorganic porous bodies to have a large specific surface area without suffering from a significant decrease in mechanical strength. A pore size of 0.5 nm or more, on the other hand, allows the chemicals to be added and the gas component to be treated to get into the pores easily.

The inorganic porous bodies adopted for the present invention preferably has a specific surface area (in terms of the BET specific surface area) of 50.0 $m^2/g$ or more and 1,200.0 $m^2/g$ or less, the lower limit being more preferably 100.0 $m^2/g$ or more and the upper limit being more preferably 1,000.0 $m^2/g$ or less. A BET specific surface area of 50.0 $m^2/g$ or more allows a practically adequate area to be ensured for the reaction of the chemicals added, making it possible to achieve a practically adequate rate of reaction with the gas component to be removed. A BET specific surface area of 1,200.0 $m^2/g$ or less, on the other hand, serves to prevent the handleability of the inorganic porous bodies from deteriorating as a result of a decrease in their mechanical strength.

Then, for the present invention, the water-soluble acid hydrazide compound supported on the inorganic porous bodies acts to dramatically improve the capability for chemical adsorption of aldehydes such as formaldehyde and acetaldehyde, thereby enabling the selective adsorption of aldehydes.

An acid hydrazide compound is a compound having an acid hydrazide group, represented as $-CO-NHNH_2$, derived from carboxylic acid and hydrazine, and a nitrogen atom having an unshared electron pair is bonded at the $\alpha$-position of the hydrazide terminal, resulting in a huge increase in nucleophilic reactivity.

It is considered that this unshared electron pair causes reaction by nucleophilically attacking the carbonyl carbon atoms in the aldehydes to immobilize the aldehydes through conversion into hydrazine derivatives, thereby developing an aldehyde removal capability.

Unlike other aldehydes, acetaldehyde has an electron-releasing alkyl group at the $\alpha$-position of carbonyl carbon and therefore, the carbonyl carbon is low in electrophilicity, leading to a low chemical adsorption rate. Compared to this, the acid hydrazides adopted in the gas adsorbent according to the present invention are so high in electrophilicity as to develop a high chemical adsorption capability for acetaldehyde.

Useful acid hydrazide compounds for the present invention include acid monohydrazides having one acid hydrazide group in a molecule such as formhydrazide, acetohydrazide, propionic acid hydrazide, and benzoic acid hydrazide; acid dihydrazides having two acid hydrazide groups in a molecule such as carbodihydrazide, glutamic acid dihydrazide, succinic acid dihydrazide, adipic acid dihydrazide, dodecanedioic acid dihydrazide, fumaric acid dihydrazide, maleic acid dihydrazide, and terephthalic acid dihydrazide; and acid polyhydrazides having three or more acid hydrazide groups in a molecule such as polyacrylic acid hydrazide.

Of these, water-soluble acid hydrazide compounds are used as the acid hydrazide compounds adopted for the present invention. Here, the term "water-soluble" refers to the property of dissolving to 5 mass% or more (5 g/100 g) in neutral water at a temperature of 25°C and in particular, such aldehydes as carbodihydrazide, succinic acid dihydrazide, and adipic acid dihydrazide are preferred from the viewpoint of adsorption performance. Furthermore, to enhance the aldehyde performance, adipic acid dihydrazide and succinic acid dihydrazide may be used in combination, which serves particularly for increasing the acetaldehyde adsorption capacity.

For the gas adsorbent according to the present invention, furthermore, it is important to support a compound having a thiol-based functional group. The thiol-based functional group (S-H) not only contributes to the reaction with aldehydes, but also has reactivity with the metal existing on the pore surface of the inorganic porous bodies and therefore, it is considered that it can act to depress the decomposition reaction of the water-soluble acid hydrazide compound, which is accelerated by catalyst action of the metal to work as a major factor in the aged degradation in aldehyde removal performance of the gas adsorbent. Furthermore, the thiol-based functional group itself tends to be oxidized easily and accordingly, the supported compound with a thiol-based functional group is expected to serve to prevent oxidative decompose of the water-soluble acid hydrazide compound, which is high in reactivity with aldehydes.

If the compound having a thiol-based functional group additionally contains an amino group ($NH_2$) in the functional group (an amino-based functional group), it is preferred because the amino-based functional group contributes to the reactivity with aldehydes.

For the present invention, useful compounds with a functional group containing both a thiol-based functional group and an amino-based functional group include cysteines. Specifically, such cysteines include L-cysteines, D-cysteines, D,L-cysteines, and salts thereof, as well as cysteine derivatives such as esters of the carboxyl group and amides of the carboxyl group contained in these cysteines, which may be used singly or as a combination of two or more thereof. Of these, L-cysteines are preferred from the viewpoint of low price and high availability.

Next, the supported amount of the water-soluble acid hydrazide compound adopted for the present invention is preferably 0.5 parts by mass or more and 30 parts by mass or less relative to 100 parts by mass of the inorganic porous bodies, the lower limit more preferably being 2.0 parts by mass or more and the upper limit more preferably being 20 parts by mass or less. If the supported amount of the water-soluble acid hydrazide compound is 0.5 parts by mass or more, it serves to improve the aldehyde removal efficiently and aldehyde adsorption capacity. If the supported amount of the water-soluble acid hydrazide compound is 30 parts by mass or less, on the other hand, it serves to prevent the water-soluble acid hydrazide compound from crystallizing and filling the pores in the inorganic porous bodies, which will cause a decrease in adsorption rate or falling off of powder.

Next, the supported amount of the compound having a thiol-based functional group is preferably 0.5 parts by mass or more and 20 parts by mass or less relative to 100 parts by mass of the inorganic porous bodies, the lower limit more preferably being 1.0 part by mass or more and the upper limit more preferably being 10 parts by mass or less. If the supported amount of the compound having a thiol-based functional group is 0.5 parts by mass or more, the compound can react adequately with the metal components attached on the pore surface. If added excessively, however, the compound will not only fill the pores in the inorganic porous bodies to cause a decrease in adsorption rate, but also generate a sulfurous odor originating from the thiol-based functional group, and accordingly the supported amount is preferably 20 parts by mass or less.

To add a water-soluble acid hydrazide compound and a compound having a thiol-based functional group over the surface of inorganic porous bodies, an available method is to dissolve the water-soluble acid hydrazide compound and the compound having a thiol-based functional group in water, impregnate the inorganic porous bodies with the resulting aqueous solution, and subsequently dry the inorganic porous bodies. In this case, the drying temperature is preferably 100°C or less from the viewpoint of depressing the decomposition of the thiol-based functional group.

In another preferred embodiment, the gas adsorbent according to the present invention is such that a solution prepared by dispersing 5 g thereof in 100 g of water at 25°C has a pH (hydrogen ion exponent) in the range of 3.0 to 7.5. This leads to an increase in the aldehyde removal performance. If the aqueous solution has a pH of 7.5 or less, the intermediate produced from the reaction of the unshared electron pair in the acid hydrazide compound nucleophilically attacking the carbonyl carbon atoms in the aldehydes will become less liable to dehydration as it is easily protonated in the acidic reaction field, thereby promoting the immobilization reaction into derivatives to an adequately high degree. The pH of the aqueous solution is more preferably 6.5 or less. If the pH of the aqueous solution is 3.0 or more, furthermore, it serves to maintain an adequately high activity of the unshared electron pair in the acid hydrazide compound for nucleophilically attacking the carbonyl carbon atoms in the aldehydes. The pH of the aqueous solution is more preferably 4.0 or more.

The pH value is determined by immersing a specimen in pure water at a temperature of 25°C until the content of the gas adsorbent reaches 5 mass%, lightly stirring it, and leaving it to stand for 10 minutes, followed by measuring the pH of the liquid with a pH meter. The measurement of pH is carried out three times and the average is adopted.

The pH of gas adsorbent can be adjusted by attaching at least one acid selected from the group of organic acids and inorganic acids over the surface of the gas adsorbent. Such organic acids and inorganic acids themselves preferably are odor-free acids. In the case where impregnation is to be performed with the water-soluble acid hydrazide compound and the thiol-containing compound in the form of an aqueous dispersion, the attaching of at least one acid selected from the group of organic acids and inorganic acids over the surface of the gas adsorbent is preferably achieved by mixing such at least one acid selected from the group of organic acids and inorganic acids into the aqueous dispersion and subsequently adding it.

Specific examples of the organic acids include adipic acid, sulfanilic acid, malic acid, and citric acid, of which adipic acid is adopted preferably in the case where inorganic porous bodies are impregnated with an aqueous dispersion of adipic acid dihydrazide. The use of adipic acid is preferred because it acts to maintain the dispersion liquid in a stable balance and is free from generation of odors or development of hygroscopicity.

On the other hand, preferable inorganic acids include phosphoric acid. The use of phosphoric acid is preferred because it can form a poorly soluble salt with dissolved heavy metal such as iron that promotes the oxidation of the thiol-based functional group, thereby insolubilizing the heavy metals.

Next, the gas adsorbent according to the present invention can be sandwiched between two air permeable sheet-like components to form a gas adsorption sheet, in which the gas adsorbent is fixed to the sheet-like components with thermoplastic resin, i.e., binder resin.

The air permeable sheet-like components is preferably a fiber structure and specific examples include cotton-like material, knit or woven fabrics, nonwoven fabrics, paper, and other three dimensional net-like material. Laminates of these materials can also be used. These structures serve to ensure a large surface area while maintaining air permeability. The use of nonwoven fabrics is preferred when producing air filters.

Useful fibers for forming a fiber structure for the sheet-like components include natural fiber, synthetic fiber, and inorganic fibers such as glass fiber and metal fiber, of which synthetic fiber of thermoplastic resin that can be produced by melting spinning is preferred. Examples of thermoplastic resin useful for forming synthetic fiber include polyester, polyamide, polyolefin, acrylic, vinylon (polyvinyl alcohol), polystyrene, polyvinyl chloride, polyvinylidene chloride, and polylactic acid, of which an appropriate one may be selected according to the purpose. Furthermore, a plurality thereof may be used in combination.

The fiber that constitutes such fiber structures may have an appropriate fiber diameter that suits the air permeability and dust collection performance required in the intended air filter, but preferably in the range of 1 $\mu$m or more and 2,000 $\mu$m or less. A fiber diameter of 1 $\mu$m or more, more preferably 5 $\mu$m or more, serves to prevent clogging of the gas adsorbent over the surface of the fiber structure, thereby preventing a decrease in air permeability. A fiber diameter of 2,000 $\mu$m or less, more preferably 100 $\mu$m or less, on the other hand, serves to prevent a deterioration in the capability for supporting the gas adsorbent or a decrease in the efficiency of contact with the air under treatment that may result from a decrease in the surface area of the fiber.

To maintain air permeability, a sheet-like component preferably has a metsuke (weight per unit surface area) of 10 g/m$^2$ or more and 500 g/m$^2$ or less. A metsuke of 10 g/m$^2$ or more serves to obtain an adequate strength to be resistant to processing for attaching the gas adsorbent and a high rigidity required to maintain the filter structure as air passes through it. A metsuke of 500 g/m$^2$ or less, more preferably 200 g/m$^2$ or less, serves to allow the gas adsorbent to be attached uniformly even in deep parts of the air permeable sheet-like components and maintain a high handleability during fabrication of products of a pleat shape or honeycomb shape.

It is preferable that at least one of the air permeable sheet-like components is electret-treated. If electret-treated, the components will have electrostatic force to collect submicronic or nano-sized fine dust that cannot be collected easily by ordinary filters.

Preferable materials for electret-treated sheet-like components such as nonwoven fabrics include those with a large electric resistance including polyolefin resins such as polypropylene, polyethylene, polystyrene, polybutylene terephthalate, and polytetrafluoroethylene; aromatic polyester based resins such as polyethylene terephthalate; and others such as polycarbonate resin.

For the gas adsorption sheet according to the present invention, the supported amount of the gas adsorbent is preferably 5 g/m$^2$ or more and 300 g/m$^2$ or less. A supported amount of 5 g/m$^2$ or more, preferably 10 g/m$^2$ or more, serves to achieve an improved aldehyde removal efficiency and adsorption capacity. A supported amount of 300 g/m$^2$ or less, more preferably 200 g/m$^2$ or less, serves to prevent clogging of the gas adsorbent over the surface of the air permeable gas adsorption sheet-like components, thereby preventing a decrease in air permeability.

Furthermore, the gas adsorption sheet according to the present invention can also support particulate activated carbon in addition to the gas adsorbent according to the present invention. If supporting particulate activated carbon, the sheet can remove VOC gases other than aldehyde, making it possible to adsorb and remove all VOC gases.

To immobilize the gas adsorbent on the air permeable sheet-like components, a preferred method is to scatter powder of a mixture of the gas adsorbent according to the present invention and thermoplastic resin over an air permeable sheet-like component such as nonwoven fabric and put another air permeable sheet-like component such as nonwoven fabric thereon, followed by hot pressing for integration. The adoption of this method serves to prevent the surface of the gas adsorbent according to the present invention from being covered with thermoplastic resin to cause functional deterioration, thereby leading to an increased adsorption rate and very effective development of adsorption capability.

Useful thermoplastic resins for immobilizing the gas adsorbent according to the present invention on air permeable sheet-like components such as nonwoven fabric include EVA based, polyester based, polyamide based, and low density polyethylene based thermoplastic resins.

The thermoplastic resin preferably has a particle diameter distribution in the range of 10 $\mu$m or more and 1,000 $\mu$m or less. A particle diameter distribution of preferably 10 $\mu$m or more, more preferably 50 $\mu$m or more, serves to prevent the particles from coming off from the air permeable sheet-like components or scattering away. A particle diameter distribution of preferably 1,000 $\mu$m or less, more preferably 700 $\mu$m or less, serves to prevent a decrease in the surface smoothness of the gas adsorbent after its immobilization on the air permeable sheet-like components.

The air filter according to the present invention is produced by using the gas adsorption sheet according to the present invention. With respect to its shape, it may be used in the original planar shape, but preferred shapes include pleat-like and honeycomb-like. When used as cross flow filter and as parallel flow filter, pleat-like ones and honeycomb-like ones, respectively, increase the area of contact with the air under treatment to enhance the collection efficiency and at the same time reduce the pressure loss.

It is preferable for the air filter according to the present invention to be housed in a frame body from the viewpoint of air treatment efficiency and handleability.

The gas adsorption sheets that uses the gas adsorbent according to the present invention are preferred for use in air-filtering gas adsorption sheets including air filters for cleaning air in vehicles such as automobiles and train cars; filters for air cleaners to be used in healthy houses, apartments adaptable to pets, facilities for the elderly, hospitals, and offices; and others such as air conditioner filter, intake/exhaust air filters for office automation equipment, filters for air conditioners for buildings, and filters for industrial clean rooms.

Examples

[Measuring methods]

(1) Supported amount of a water-soluble acid hydrazide compound and supported amount of a compound having a thiol-based functional group (parts by mass):

Inorganic porous bodies were impregnated with a liquid prepared by mixing and dispersing a water-soluble acid hydrazide compound and a compound having a thiol-based functional group, followed by drying. The total supported amount was calculated from the difference between the weight of the gas adsorbent after drying and the weight of the inorganic porous bodies before impregnation and drying, and the total supported amount was multiplied by the proportion of each feed materials to determine the proportions of their supported amounts relative to the entire gas adsorbent.

(2) pH (hydrogen ion exponent) of the gas adsorbent:

The pH value was determined by immersing a specimen in 100 g of pure water at a temperature of 25°C until the content of the gas adsorbent reached 5 mass%, lightly stirring it, and leaving it to stand for 10 minutes, followed by measuring the pH of the resulting solution with a tester pH meter manufactured by LACOMU(trade name: Ecoscan pH5). Three measurements were taken and their average was adopted.

(3) Metsuke of supported gas adsorbent and thermoplastic resin ($g/m^2$):

The gas adsorbent and thermoplastic resin were mixed and stirred to prepare a powder mixture and it was scattered over an air permeable sheet-like component. Then, another air permeable sheet-like component was put on top of it and the layers were hot-pressed to integrate them, followed by measuring the overall metsuke. The metsuke of the two air permeable sheet-like components was subtracted from the overall metsuke and the difference obtained was multiplied by the proportion of each feed material to determine the proportions of the supported amounts of the gas adsorbent and thermoplastic resin relative to the entire gas adsorption sheet.

(4) Acetaldehyde removal performance:

A 12 cm × 12 cm square of a plate-like gas adsorption sheet was fixed to a 10 cm × 10 cm experimental duct and an air flow at a temperature of 23°C and a humidity of 50%RH was sent through the duct at a speed of 0.2 m/sec. Acetaldehyde was added at the upstream end from a standard gas cylinder at an upstream concentration of 10 ppm and the air was sampled on the upstream and downstream sides of the gas adsorption sheet. The change in the acetaldehyde concentration with time was measured on each side using an infrared absorption type continuous monitor and the removal efficiency was calculated by the following equation.

$$\cdot \ \text{Removal efficiency (\%)} = [(C_0\text{-}C)/C_0] \times 100$$

Here, $C_0$: upstream side acetaldehyde concentration (= 10 ppm)
C: downstream side acetaldehyde concentration (ppm)

The removal efficiency was measured 100 seconds after the start of the acetaldehyde addition to determine the initial removal efficiency and the change in removal efficiency with time was measured after this 100 second point. The adsorption capacity, which is defined as the total adsorbed amount at the point where the difference between the upstream side concentration and the downstream side concentration reaches 5%, was determined for evaluation.

(5) Aged degradation confirmation test:

A sample of a planar gas adsorption sheet was left to stand in an environment set to a temperature of 23°C and a humidity of 50% RH for eight months after sample preparation, then fixed to an experimental duct, and subjected to acetaldehyde removal performance evaluation by the method described in paragraph (4).

(6) Specific surface area of inorganic porous bodies:

The BET specific surface area of inorganic porous bodies was measured according to the BET multipoint method specified in JIS R 1626 (1996) using the NOVA2200e manufactured by Yuasa Ionics Inc.

(7) Average pore size of inorganic porous bodies:

Assuming that each inorganic porous body has a cylindrical shape, the average pore size (D) was calculated from the specific surface area (S), which was obtained from the BET specific surface area measurement, and the pore volume (V) by the following equation.

$$\cdot \ D = 4V/S$$

[Preparation of gas adsorbent A]

(Inorganic porous bodies)

Particles of porous silica (manufactured by AGC Si-Tech Co., Ltd.) with particle diameters in the range of 150 to 355 $\mu$m, specific surface area of 650 m$^2$/g, and average pore size of 6.0 nm were sized according to JIS Z 8801 (2006).

(Water-soluble acid hydrazide compound)

Adipic acid dihydrazide with a water solubility of 8.0% (manufactured by Otsuka Chemical Co., Ltd.) was used.

(Compound having a thiol-based functional group)

L-cysteine (Tomo chemical Co., Ltd.) was used.

(Gas adsorbent A)

The inorganic porous bodies were impregnated with an aqueous solution in which 8.0 mass% of the adipic acid dihydrazide and 6.0 mass% of the L-cysteine relative to 100 mass% of the aqueous solution were uniformly dispersed, followed by drying at a temperature of 110°C for 5 hours to provide gas adsorbent A. A 5 g portion of gas adsorbent A obtained above was dispersed in 100 g of water to prepare a solution, which was found to have a pH of 7.2.

[Preparation of gas adsorbent B]

(Inorganic porous bodies)

The same product as for gas adsorbent A was used.

(Water-soluble acid hydrazide compound)

The same product as for gas adsorbent A was used.

(Compound having a thiol-based functional group)

The same product as for gas adsorbent A was used.

(Gas adsorbent B)

The inorganic porous bodies were impregnated with an aqueous solution in which 8.0 mass% of the adipic acid dihydrazide and 2.5 mass% of the L-cysteine relative to 100 mass% of the aqueous solution were uniformly dispersed, followed by drying at a temperature of 110°C for 5 hours to provide gas adsorbent B. A 5 g portion of gas adsorbent B obtained above was dispersed in 100 g of water to prepare a solution, which was found to have a pH of 7.3.

[Preparation of gas adsorbent C]

(Inorganic porous bodies)

The same product (porous silica) as for gas adsorbent A was used.

(Water-soluble acid hydrazide compound)

The same product (adipic acid dihydrazide) as for gas adsorbent A was used.

(Compound having a thiol-based functional group)

The same product (L-cysteine) as for gas adsorbent A was used.

(Organic acid)

Adipic acid (manufactured by Nacalai Tesque, Inc.) was used as organic acid.

(Gas adsorbent C)

The inorganic porous bodies were impregnated with an aqueous solution in which 8.0 mass% of the adipic acid dihydrazide, 2.5 mass% of the L-cysteine, and 0.1 mass% of the adipic acid relative to 100 mass% of the aqueous solution were uniformly dispersed, followed by drying at a temperature of 110°C for 5 hours to provide gas adsorbent C. A 5 g portion of gas adsorbent C obtained above was dispersed in 100 g of water to prepare a solution, which was found to have a pH of 5.4.

[Preparation of gas adsorbent D]

(Inorganic porous bodies)

The same product (porous silica) as for gas adsorbent A was used.

(Water-soluble acid hydrazide compound)

The same product (adipic acid dihydrazide) as for gas adsorbent A was used.

(Compound having a thiol-based functional group)

The same product (L-cysteine) as for gas adsorbent A was used.

(Inorganic acid)

Phosphoric acid (manufactured by Nacalai Tesque, Inc.) was used as inorganic acid.

(Gas adsorbent D)

The inorganic porous bodies were impregnated with an aqueous solution in which 8.0 mass% of the adipic acid dihydrazide, 2.5 mass% of the L-cysteine, and 0.1 mass% of the phosphoric acid relative to 100 mass% of the aqueous solution were uniformly dispersed, followed by drying at a temperature of 110°C for 5 hours to provide gas adsorbent D. A 5 g portion of gas adsorbent D obtained above was dispersed in 100 g of water to prepare a solution, which was found to have a pH of 5.9.

[Preparation of gas adsorbent E]

(Inorganic porous bodies)

The same product (porous silica) as for gas adsorbent A was used.

(Water-soluble acid hydrazide compound)

Succinic acid dihydrazide with a water solubility of 27.3% (manufactured by Japan Finechem Inc.) was used.

(Compound having a thiol-based functional group)

The same product (L-cysteine) as for gas adsorbent A was used.

(Inorganic acid)

The same product (phosphoric acid) as for gas adsorbent D was used.

(Gas adsorbent E)

The inorganic porous bodies were impregnated with an aqueous solution in which 12.0 mass% of the succinic acid dihydrazide, 6.0 mass% of the L-cysteine, and 0.1 mass% of the phosphoric acid relative to 100 mass% of the aqueous solution were uniformly dispersed, followed by drying at a temperature of 110°C for 5 hours to provide gas adsorbent E. A 5 g portion of gas adsorbent E obtained above was dispersed in 100 g of water to prepare a solution, which was found to have a pH of 6.1.

[Preparation of gas adsorbent F]

(Inorganic porous bodies)

The same product (porous silica) as for gas adsorbent A was used.

(Water-soluble acid hydrazide compound)

Carbodihydrazide with a water solubility of 31.9% (manufactured by Japan Finechem Inc.) was used.

(Compound having a thiol-based functional group)

The same product (L-cysteine) as for gas adsorbent A was used.

(Inorganic acid)

The same product (phosphoric acid) as for gas adsorbent D was used.

(Gas adsorbent F)

The inorganic porous bodies were impregnated with an aqueous solution in which 20.0 mass% of the succinic acid dihydrazide, 6.0 mass% of the L-cysteine, and 0.1 mass% of the phosphoric acid relative to 100 mass% of the aqueous solution were uniformly dispersed, followed by drying at a temperature of 110°C for 5 hours to provide gas adsorbent F. A 5 g portion of gas adsorbent F obtained above was dispersed in 100 g of water to prepare a solution, which was found to have a pH of 5.8.

[Preparation of gas adsorbent G]

(Inorganic porous bodies)

The same product (porous silica) as for gas adsorbent A was used.

(Water-soluble acid hydrazide compound)

The same product (adipic acid dihydrazide) as for gas adsorbent A was used.

(Gas adsorbent G)

The inorganic porous bodies were impregnated with an aqueous solution in which 8.0 mass% of the adipic acid dihydrazide relative to 100 mass% of the aqueous solution was uniformly dispersed, followed by drying at a temperature of 110°C for 5 hours to provide gas adsorbent G. A 5 g portion of gas adsorbent G obtained above was dispersed in 100 g of water to prepare a solution, which was found to have a pH of 7.1.

[Preparation of gas adsorbent H]

(Inorganic porous bodies)

The same product (porous silica) as for gas adsorbent A was used.

(Compound having a thiol-based functional group)

The same product (L-cysteine) as for gas adsorbent A was used.

(Gas adsorbent H)

The inorganic porous bodies were impregnated with an aqueous solution in which 8.0 mass% of the L-cysteine relative to 100 mass% of the aqueous solution was uniformly dispersed, followed by drying at a temperature of 110°C for 5 hours to provide gas adsorbent H. A 5 g portion of gas adsorbent H obtained above was dispersed in 100 g of water to prepare a solution, which was found to have a pH of 7.3.

[Preparation of gas adsorbent I]

(Inorganic porous bodies)

The same product (porous silica) as for gas adsorbent A was used.

(Amine based chemical)

Guanidine sulfamate (manufactured by Sanwa Chemical Co., Ltd.) having an amino-based functional group in the molecular structure and a water solubility of 110% was used.

(Gas adsorbent I)

The inorganic porous bodies were impregnated with an aqueous solution in which 8.0 mass% of the guanidine sulfamate relative to 100 mass% of the aqueous solution was uniformly dispersed, followed by drying at a temperature of 110°C for 5 hours to provide gas adsorbent I. A 5 g portion of gas adsorbent I obtained above was dispersed in 100 g of water to prepare a solution, which was found to have a pH of 7.3.

[Preparation of gas adsorbent J]

(Inorganic porous bodies)

The same product (porous silica) as for gas adsorbent A was used.

(Water-soluble acid hydrazide compound)

The same product (adipic acid dihydrazide) as for gas adsorbent A was used.

(Amine based chemical)

The same product (guanidine sulfamate) as for gas adsorbent I was used.

(Organic acid)

The same product (adipic acid) as for gas adsorbent C was used.

(Gas adsorbent J)

The inorganic porous bodies were impregnated with an aqueous solution in which 8.0 mass% of the adipic acid dihydrazide, 8.0 mass% of the guanidine sulfamate, and 0.1 mass% of the adipic acid relative to 100 mass% of the aqueous solution were uniformly dispersed, followed by drying at a temperature of 110°C for 5 hours to provide gas adsorbent J. A 5 g portion of gas adsorbent J obtained above was dispersed in 100 g of water to prepare a solution, which was found to have a pH of 6.1.

[Preparation of gas adsorbent K]

(Inorganic porous bodies)

The same product (porous silica) as for gas adsorbent A was used.

(Compound having a thiol-based functional group)

The same product (L-cysteine) as for gas adsorbent A was used.

(Inorganic acid)

The same product (phosphoric acid) as for gas adsorbent D was used.

(Gas adsorbent K)

The inorganic porous bodies were impregnated with an aqueous solution in which 8.0 mass% of the L-cysteine and 0.1 mass% of the phosphoric acid relative to 100 mass% of the aqueous solution were uniformly dispersed, followed by drying at a temperature of 100°C for 5 hours to provide gas adsorbent K. A 5 g portion of gas adsorbent K obtained above was dispersed in 100 g of water to prepare a solution, which was found to have a pH of 5.8.

[Example 1]

(Air permeable sheet-like component A)

A chemical bond nonwoven fabric with a metsuke of 50 g/m$^2$ consisting of 16.5 mass% vinylon (polyvinyl alcohol) fiber with a single filament fineness of 1.5 dtex, 22 mass% of vinylon (polyvinyl alcohol) fiber with a single filament fineness of 7.1 dtex, 16.5 mass% of polyethylene terephthalate fiber with a single filament fineness of 2.0 dtex, and 45 mass% of an acrylic resin binder containing a phosphorous flame retardant was used as air permeable sheet-like component A which was located on the upstream side in the air flow.

(Air permeable sheet-like component B)

An electrostatic charged fiber sheet of an electret-treated meltblown nonwoven fabric of polypropylene fiber with a metsuke of 20 g/m$^2$ was used as the other component, namely, air permeable sheet-like component B.

(Gas adsorbent)

Gas adsorbent A prepared previously was used as adsorbent.

(Heat seal resin)

Low density polyethylene (melting point of 98°C, MI 200 g/10 min (JIS K7210 (1999))) sized in the range of 50 to 300 μm was used as heat seal resin.

(Gas adsorption sheet production method)

Gas adsorbent A and heat adhesive resin (low density polyethylene) were mixed at a mass ratio of 2:1 and stirred to prepare a uniform mixture, which was scattered over air permeable sheet-like component B and covered with air permeable sheet-like component A, followed by hot pressing to prepare gas adsorption sheet A. Results are given in Table 1.

[Example 2]

Except for using gas adsorbent B prepared above as the gas adsorbent, the same production procedure as in Example 1 was carried out using the same air permeable sheet-like components and heat seal resin as in Example 1 to provide gas adsorption sheet B. Results are given in Table 1.

[Example 3]

Except for using gas adsorbent C prepared above as the gas adsorbent, the same production procedure as in Example 1 was carried out using the same air permeable sheet-like components and heat seal resin as in Example 1 to provide gas adsorption sheet C. Results are given in Table 1.

[Example 4]

Except for using gas adsorbent D prepared above as the gas adsorbent, the same production procedure as in Example 1 was carried out using the same air permeable sheet-like components and heat seal resin as in Example 1 to provide gas adsorption sheet D. Results are given in Table 2.

[Example 5]

Except for using gas adsorbent E prepared above as the gas adsorbent, the same production procedure as in Example 1 was carried out using the same air permeable sheet-like components and heat seal resin as in Example 1 to provide gas adsorption sheet E. Results are given in Table 2.

[Example 6]

Except for using gas adsorbent F prepared above as the gas adsorbent, the same production procedure as in Example 1 was carried out using the same air permeable sheet-like components and heat seal resin as in Example 1 to provide gas adsorption sheet F. Results are given in Table 2.

[Comparative example 1]

Except for using gas adsorbent G prepared above as the gas adsorbent, the same production procedure as in Example 1 was carried out using the same air permeable sheet-like components and heat seal resin as in Example 1 to provide gas adsorption sheet G. Results are given in Table 3.

[Comparative example 2]

Except for using gas adsorbent H prepared above as the gas adsorbent, the same production procedure as in Example 1 was carried out using the same air permeable sheet-like components and heat seal resin as in Example 1 to provide gas adsorption sheet H. Results are given in Table 3.

[Comparative example 3]

Except for using gas adsorbent I prepared above as the gas adsorbent, the same production procedure as in Example 1 was carried out using the same air permeable sheet-like components and heat seal resin as in Example 1 to provide gas adsorption sheet I. Results are given in Table 3.

[Comparative example 4]

Except for using gas adsorbent J prepared above as the gas adsorbent, the same production procedure as in Example 1 was carried out using the same air permeable sheet-like components and heat seal resin as in Example 1 to provide gas adsorption sheet J. Results are given in Table 4.

[Comparative example 5]

Except for using gas adsorbent K prepared above as the gas adsorbent, the same production procedure as in Example 1 was carried out using the same air permeable sheet-like components and heat seal resin as in Example 1 to provide gas adsorption sheet K. Results are given in Table 4.

<Summary>

Measurements of the acetaldehyde removal efficiency and adsorption capacity made in Examples 1 to 6 and Comparative examples 1 to 5 are given in Tables 1 and 2 (Examples) and Tables 3 and 4 (Comparative examples). For overall evaluation, a sample was ranked as A when the performance deterioration rate, calculated by the equation given in the cell for performance deterioration rate in Table 1, was 40% or less while the acetaldehyde adsorption in 8 months after sample preparation was 0.40 $g/m^2$ or more, ranked as B when the performance deterioration rate was 40% or less while the acetaldehyde adsorption in 8 months after sample preparation was 0.25 $g/m^2$ or more and less than 0.40 $g/m^2$, and ranked as C when the acetaldehyde adsorption in 8 months after sample preparation was less than 0.25 $g/m^2$. In Examples 1 to 6 and Comparative examples 1 and 4, the samples immediately after sample preparation showed an initial acetaldehyde removal efficiency of more than 50% as they carry a water-soluble acid hydrazide compound, and they also showed a high adsorption of 0.30 $g/m^2$ or more. As compared with Comparative example 1 where only a water-soluble acid hydrazide compound was added, the samples prepared in Examples 1 to 6, which carried a compound having a thiol-based functional group, showed a large acetaldehyde adsorption immediately after sample preparation.
As compared with the other Examples, an organic acid or an inorganic acid is added in Examples 3 to 6 to adjust the pH to a weakly acidic level to increase the rate of reaction between acetaldehyde and the acid hydrazide compound, resulting in a high acetaldehyde removal efficiency and a large adsorption immediately after sample preparation.
In Comparative examples 2, 3, and 5, on the other hand, no water-soluble acid hydrazide compound is added and accordingly the initial removal efficiency immediately after sample preparation was below 50%, namely 24.2%, 36.2%, and 23.8%, respectively. The acetaldehyde adsorption immediately after sample is also a low 0.12 $g/m^2$, 0.23 $g/m^2$, and 0.11 $g/m^2$, respectively, indicating poor dynamic aldehyde removal performance.
Next, as seen in Examples 1 to 6, test results on the acetaldehyde removal performance of samples left for 8 months show that the addition of a compound having a thiol-based functional group served to maintain the adsorption decrease rate at a low level, namely 20% to 30%, and the acetaldehyde adsorption measured 8 months after sample preparation was 0.30 $g/m^2$ or more, indicating a high performance.
As compared to this, in Comparative examples 1 and 4, where no compound having a thiol-based functional group was added, it was found that the adsorption decrease rate was above 60% and the acetaldehyde adsorption measured 8 months after sample preparation was a very low 0.14 $g/m^2$ and 0.21 $g/m^2$, respectively.

[Table 1]

[Table 1]

|  | Example 1 | Example 2 | Example 3 |
|---|---|---|---|
| Gas adsorbent used | gas adsorbent A | gas adsorbent B | gas adsorbent C |

(continued)

| | | Example 1 | Example 2 | Example 3 |
|---|---|---|---|---|
| Content in dispersion liquid (mass%) | adipic acid dihydrazide | 8.0 | 8.0 | 8.0 |
| | succinic acid dihydrazide | 0.0 | 0.0 | 0.0 |
| | carbodihydrazide | 0.0 | 0.0 | 0.0 |
| | L-cysteine | 6.0 | 2.5 | 2.5 |
| | guanidine sulfamate | 0.0 | 0.0 | 0.0 |
| | adipic acid | 0.0 | 0.0 | 0.1 |
| | phosphoric acid | 0.0 | 0.0 | 0.0 |
| Amount supported on inorganic porous bodies (parts by mass) | adipic acid dihydrazide | 6.4 | 6.4 | 6.4 |
| | succinic acid dihydrazide | 0.0 | 0.0 | 0.0 |
| | carbodihydrazide | 0.0 | 0.0 | 0.0 |
| | L-cysteine | 4.8 | 2.0 | 2.0 |
| | guanidine sulfamate | 0.0 | 0.0 | 0.0 |
| | adipic acid | 0.0 | 0.0 | 0.1 |
| | phosphoric acid | 0.0 | 0.0 | 0.0 |
| pH of gas adsorbent | | 7.2 | 7.3 | 5.4 |
| Metsuke of gas adsorbent feed on filter material (g/m$^2$) | gas adsorbent | 50 | 50 | 50 |
| | thermoplastic resin | 25 | 25 | 25 |
| Metsuke of gas adsorbent supported on filter material (g/m$^2$) | gas adsorbent | 49 | 52 | 51 |
| | thermoplastic resin | 25 | 26 | 26 |
| Immediately after sample preparation | initial acetaldehyde removal efficiency (in 100 seconds) (%) | 59.4 | 58.2 | 65.2 |
| | acetaldehyde adsorption (g/m$^2$) [A] | 0.54 | 0.45 | 0.59 |
| 8 months after sample preparation | initial acetaldehyde removal efficiency (in 100 seconds) (%) | 55.4 | 56.6 | 59.8 |
| | acetaldehyde adsorption (q/m$^2$) [B] | 0.39 | 0.33 | 0.44 |
| Immediately after preparation to 8 months later | performance deterioration rate (%) (( [A]-[B])/[A])×100 | 27.8 | 26.7 | 25.4 |
| Overall evaluation | | B | B | A |

[Table 2]

[Table 2]

| | Example 4 | Example 5 | Example 6 |
|---|---|---|---|
| Gas adsorbent used | gas adsorbent D | gas adsorbent E | gas adsorbent F |

(continued)

| | | Example 4 | Example 5 | Example 6 |
|---|---|---|---|---|
| Content in dispersion liquid (mass%) | adipic acid dihydrazide | 8.0 | 0.0 | 0.0 |
| | succinic acid dihydrazide | 0.0 | 12.0 | 0.0 |
| | carbodihydrazide | 0.0 | 0.0 | 20.0 |
| | L-cysteine | 2.5 | 6.0 | 6.0 |
| | guanidine sulfamate | 0.0 | 0.0 | 0.0 |
| | adipic acid | 0.0 | 0.0 | 0.0 |
| | phosphoric acid | 0.1 | 0.1 | 0.1 |
| Amount supported on inorganic porous bodies (parts by mass) | adipic acid dihydrazide | 6.4 | 0.0 | 0.0 |
| | succinic acid dihydrazide | 0.0 | 9.6 | 0.0 |
| | carbodihydrazide | 0.0 | 0.0 | 16.0 |
| | L-cysteine | 2.0 | 4.8 | 4.8 |
| | guanidine sulfamate | 0.0 | 0.0 | 0.0 |
| | adipic acid | 0.0 | 0.0 | 0.0 |
| | phosphoric acid | 0.1 | 0.1 | 0.1 |
| pH of gas adsorbent | | 5.9 | 6.1 | 5.8 |
| Metsuke of gas adsorbent feed on filter material (g/m$^2$) | gas adsorbent | 50 | 50 | 50 |
| | thermoplastic resin | 25 | 25 | 25 |
| Metsuke of gas adsorbent supported on filter material (g/m$^2$) | gas adsorbent | 51 | 52 | 50 |
| | thermoplastic resin | 26 | 26 | 25 |
| Immediately after sample preparation | initial acetaldehyde removal efficiency (in 100 seconds) (%) | 66.3 | 67.4 | 68.8 |
| | acetaldehyde adsorption (g/m$^2$) [A] | 0.58 | 0.68 | 0.78 |
| 8 months after sample preparation | initial acetaldehyde removal efficiency (in 100 seconds) (%) | 62.2 | 62.2 | 64.4 |
| | acetaldehyde adsorption (g/m$^2$) [B] | 0.43 | 0.54 | 0.61 |
| Immediately after preparation to 8 months later | performance deterioration rate (%) (( [A]-[B])/[A])×100 | 25.9 | 20.6 | 21.8 |
| Overall evaluation | | A | A | A |

[Table 3]

[Table 3]

| | Comparative example 1 | Comparative example 2 | Comparative example 3 |
|---|---|---|---|
| Gas adsorbent used | gas adsorbent G | gas adsorbent H | gas adsorbent I |

(continued)

|  |  | Comparative example 1 | Comparative example 2 | Comparative example 3 |
|---|---|---|---|---|
| Content in dispersion liquid (mass%) | adipic acid dihydrazide | 8.0 | 0.0 | 0.0 |
|  | succinic acid dihydrazide | 0.0 | 0.0 | 0.0 |
|  | carbodihydrazide | 0.0 | 0.0 | 0.0 |
|  | L-cysteine | 0.0 | 8.0 | 0.0 |
|  | guanidine sulfamate | 0.0 | 0.0 | 8.0 |
|  | adipic acid | 0.0 | 0.0 | 0.0 |
|  | phosphoric acid | 0.0 | 0.0 | 0.0 |
| Amount supported on inorganic porous bodies (parts by mass) | adipic acid dihydrazide | 6.4 | 0.0 | 0.0 |
|  | succinic acid dihydrazide | 0.0 | 0.0 | 0.0 |
|  | carbodihydrazide | 0.0 | 0.0 | 0.0 |
|  | L-cysteine | 0.0 | 6.4 | 0.0 |
|  | guanidine sulfamate | 0.0 | 0.0 | 6.4 |
|  | adipic acid | 0.0 | 0.0 | 0.0 |
|  | phosphoric acid | 0.0 | 0.0 | 0.0 |
| pH of gas adsorbent |  | 7.1 | 7.3 | 7.3 |
| Metsuke of gas adsorbent feed on filter material (g/m$^2$) | gas adsorbent | 50 | 50 | 50 |
|  | thermoplastic resin | 25 | 25 | 25 |
| Metsuke of gas adsorbent supported on filter material (g/m$^2$) | gas adsorbent | 52 | 51 | 49 |
|  | thermoplastic resin | 26 | 26 | 25 |
| Immediately after sample preparation | initial acetaldehyde removal efficiency (in 100 seconds) (%) | 58.2 | 24.2 | 36.2 |
|  | acetaldehyde adsorption (g/m$^2$) [A] | 0.35 | 0.12 | 0.23 |
| 8 months after sample preparation | initial acetaldehyde removal efficiency (in 100 seconds) (%) | 50.8 | 22.3 | 28.8 |
|  | acetaldehyde adsorption (g/m$^2$) [B] | 0.14 | 0.08 | 0.11 |
| Immediately after preparation to 8 months later | performance deterioration rate (%) (([A]-[B])/[A])×100 | 60.0 | 33.3 | 52.2 |
| Overall evaluation |  | C | C | C |

[Table 4]

[Table 4]

| | | Comparative example 4 | Comparative example 5 |
|---|---|---|---|
| Gas adsorbent used | | gas adsorbent J | gas adsorbent K |
| Content in dispersion liquid (mass%) | adipic acid dihydrazide | 8.0 | 0.0 |
| | succinic acid dihydrazide | 0.0 | 0.0 |
| | carbodihydrazide | 0.0 | 0.0 |
| | L-cysteine | 0.0 | 8.0 |
| | guanidine sulfamate | 8.0 | 0.0 |
| | adipic acid | 0.1 | 0.0 |
| | phosphoric acid | 0.0 | 0.1 |
| Amount supported on inorganic porous bodies (parts by mass) | adipic acid dihydrazide | 6.4 | 0.0 |
| | succinic acid dihydrazide | 0.0 | 0.0 |
| | carbodihydrazide | 0.0 | 0.0 |
| | L-cysteine | 0.0 | 6.4 |
| | guanidine sulfamate | 6.4 | 0.0 |
| | adipic acid | 0.1 | 0.0 |
| | phosphoric acid | 0.0 | 0.1 |
| pH of gas adsorbent | | 6.1 | 5.8 |
| Metsuke of gas adsorbent feed on filter material ($g/m^2$) | gas adsorbent | 50 | 50 |
| | thermoplastic resin | 25 | 25 |
| Metsuke of gas adsorbent supported on filter material ($g/m^2$) | gas adsorbent | 51 | 51 |
| | thermoplastic resin | 26 | 26 |
| Immediately after sample preparation | initial acetaldehyde removal efficiency (in 100 seconds) (%) | 58.8 | 23.8 |
| | acetaldehyde adsorption ($g/m^2$) [A] | 0.56 | 0.11 |
| 8 months after sample preparation | initial acetaldehyde removal efficiency (in 100 seconds) (%) | 52.3 | 20.2 |
| | acetaldehyde adsorption ($g/m^2$) [B] | 0.21 | 0.08 |
| Immediately after preparation to 8 months later | performance deterioration rate (%) $(([A]-[B])/[A])\times 100$ | 62.5 | 27.3 |
| Overall evaluation | | C | C |

**Claims**

1. A gas adsorbent comprising inorganic porous bodies, and at least a water-soluble acid hydrazide compound and a compound having a thiol group, with the latter compounds being supported on the former bodies, wherein the term "water-soluble" refers to the property of dissolving 5 mass% or more, i.e. 5 g/100 g, of the acid hydrazide compound in neutral water at a temperature of 25°C.

2. A gas adsorbent as claimed in claim 1, wherein the compound having a thiol group further contains a primary amino group.

3. A gas adsorbent as claimed in claim 2, wherein the compound containing both a thiol group and an amino group is a cysteine.

4. A gas adsorbent as claimed in any one of claims 1 to 3, wherein a liquid containing 5 g of the gas adsorbent dispersed in 100 g of water has a pH in the range of 3.0 to 7.5, wherein the pH value is determined by immersing a specimen in pure water at a temperature of 25 °C until the content of the gas adsorbent reaches 5 mass%, lightly stirring it, and leaving it to stand for 10 minutes, followed by measuring the pH of the liquid with a pH meter.

5. A gas adsorbent as claimed in any one of claims 1 to 4, wherein the inorganic porous bodies further support at least one acid selected from the group of organic acids and inorganic acids.

6. A gas adsorbent as claimed in any one of claims 1 to 5, wherein the inorganic porous bodies are porous silica.

7. A gas adsorption sheet comprising a gas adsorbent as claimed in any one of claims 1 to 6 sandwiched between two air permeable sheet-like components, the gas adsorbent being fixed to the sheet-like components with thermoplastic resin.

8. An air filter comprising a gas adsorption sheet as claimed in claim 7.

9. A production method for the gas adsorbent comprising a step for dissolving a cysteine and a water-soluble acid hydrazide compound in water, a step for impregnating inorganic porous bodies therewith, and a step for drying, wherein the term "water-soluble" refers to the property of dissolving 5 mass% or more, i.e. 5 g/100 g, of the acid hydrazide compound in neutral water at a temperature of 25°C.

**Patentansprüche**

1. Gasadsorptionsmittel, umfassend anorganische poröse Körper und mindestens eine wasserlösliche Säurehydrazidverbindung und eine Verbindung mit einer Thiolgruppe, wobei die letztgenannten Verbindungen auf den erstgenannten Körpern geträgert sind, wobei sich der Begriff "wasserlöslich" auf die Eigenschaft des Auflösens von 5 Masse-% oder mehr, d. h. 5g/100g, der Säurehydrazidverbindung in neutralem Wasser bei einer Temperatur von 25°C bezieht.

2. Gasadsorptionsmittel nach Anspruch 1, wobei die Verbindung mit einer Thiolgruppe zudem eine primäre Aminogruppe enthält.

3. Gasadsorptionsmittel nach Anspruch 2, wobei die Verbindung, die sowohl eine Thiolgruppe als auch eine Aminogruppe enthält, Cystein ist.

4. Gasadsorptionsmittel nach einem der Ansprüche 1 bis 3, wobei eine Flüssigkeit, die 5g des in 100g Wasser dispergierten Gasadsorptionsmittels enthält, einen pH-Wert im Bereich von 3,0 bis 7,5 aufweist, wobei der pH-Wert durch Eintauchen einer Probe in reines Wasser bei einer Temperatur von 25°C, bis der Gehalt des Gasadsorptionsmittels 5 Masse-% erreicht, durch leichtes Rühren und 10 Minuten langes Stehenlassen, gefolgt von einer Messung des pH-Werts der Flüssigkeit mit einem pH-Meter bestimmt wird.

5. Gasadsorptionsmittel nach einem der Ansprüche 1 bis 4, wobei die anorganischen porösen Körper ferner zumindest eine Säure tragen, die aus der Gruppe der organischen Säuren und anorganischen Säuren ausgewählt ist.

6. Gasadsorptionsmittel nach einem der Ansprüche 1 bis 5, wobei die anorganischen porösen Körper poröses Siliziumdioxid sind.

7. Gasadsorptionssheet, das ein Gasadsorptionsmittel nach einem der Ansprüche 1 bis 6 umfasst, das zwischen zwei luftdurchlässigen sheetartigen Komponenten angeordnet ist, wobei das Gasadsorptionsmittel an den sheetartigen Komponenten mit thermoplastischem Harz befestigt ist.

8. Luftfilter, der ein Gasadsorptionssheet nach Anspruch 7 umfasst.

9. Herstellungsverfahren für das Gasadsorptionsmittel, umfassend einen Schritt zum Auflösen eines Cysteins und einer wasserlöslichen Säurehydrazidverbindung in Wasser, einen Schritt zum Imprägnieren von anorganischen porösen Körpern damit, und einen Schritt zum Trocknen, wobei sich der Ausdruck "wasserlöslich" auf die Eigenschaft des Auflösens von 5 Masse-% oder mehr, d. h. 5g/100g, der Säurehydrazidverbindung in neutralem Wasser bei einer Temperatur von 25°C bezieht.

**Revendications**

1. Adsorbant de gaz comprenant des corps poreux inorganiques, et au moins un composé hydrazide d'acide hydrosoluble et un composé ayant un groupe thiol, lesquels sont supportés sur les corps précédents, dans lequel le terme "hydrosoluble" fait référence à la propriété de dissolution de 5% en masse ou plus, c'est-à-dire 5 g/100 g, du composé hydrazide d'acide dans de l'eau neutre à une température de 25°C.

2. Adsorbant de gaz tel que revendiqué dans la revendication 1, dans lequel le composé ayant un groupe thiol contient en outre un groupe amino primaire.

3. Adsorbant de gaz tel que revendiqué dans la revendication 2, dans lequel le composé contenant à la fois un groupe thiol et un groupe amino est une cystéine.

4. Adsorbant de gaz tel que revendiqué dans l'une quelconque des revendications 1 à 3, dans lequel un liquide contenant 5 g de l'adsorbant de gaz dispersés dans 100 g d'eau a un pH dans la plage de 3,0 à 7,5, où la valeur de pH est déterminée en immergeant un spécimen dans de l'eau pure à une température de 25°C jusqu'à ce que la teneur de l'adsorbant de gaz atteigne 5% en masse, en l'agitant légèrement et en le laissant reposer pendant 10 minutes, ensuite en mesurant le pH du liquide avec un pH-mètre.

5. Adsorbant de gaz tel que revendiqué dans l'une quelconque des revendications 1 à 4, dans lequel les corps poreux inorganiques supportent en outre au moins un acide choisi dans le groupe d'acides organiques et d'acides inorganiques.

6. Adsorbant de gaz tel que revendiqué dans l'une quelconque des revendications 1 à 5, dans lequel les corps poreux inorganiques sont de la silice poreuse.

7. Feuille d'adsorption de gaz comprenant un adsorbant de gaz tel que revendiqué dans l'une quelconque des revendications 1 à 6 pris en sandwich entre deux composants en forme de feuille perméables à l'air, l'adsorbant de gaz étant fixé aux composants en forme de feuille avec une résine thermoplastique.

8. Filtre à air comprenant une feuille d'adsorption de gaz tel que revendiqué dans la revendication 7.

9. Procédé de production de l'adsorbant de gaz comprenant une étape de dissolution d'une cystéine et d'un composé hydrazide d'acide hydrosoluble dans l'eau, une étape d'imprégnation de corps poreux inorganiques avec ceux-ci et une étape de séchage, où le terme "hydrosoluble" fait référence à la propriété de dissolution de 5% en masse ou plus, c'est-à-dire 5 g/100 g du composé hydrazide d'acide dans de l'eau neutre à une température de 25°C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI5317703 B
- JP 2012120946 A
- JP 2002200149 A
- JP 2010058075 A